# FASCICULE DE BREVET EUROPEEN

(11) **EP 3 601 000 B1**
(45) Date de publication et mention de la délivrance du brevet: **13.01.2021**
(21) Numéro de dépôt: 18713307.9
(22) Date de dépôt: 01.03.2018
(51) Int. Cl.: B60K 1/04, B60L 1/00, B60L 3/00, B60W 10/30, F02N 11/08, B60K 25/00, B60L 15/00

(54) **PROCÉDÉ DE GESTION DES COMPOSANTS ÉLECTRIQUES DANS UN VÉHICULE AUTOMOBILE**
VERFAHREN ZUR VERWALTUNG ELEKTRISCHER KOMPONENTEN IN EINEM KRAFTFAHRZEUG
METHOD FOR MANAGING ELECTRICAL COMPONENTS IN A MOTOR VEHICLE

(30) Priorité: 30.03.2017 FR 1752672
(43) Date de publication de la demande: 05.02.2020
(73) Titulaire: PSA Automobiles SA, 78300 Poissy (FR)
(72) Inventeur: MARCHYLLIE, Alexis, 41124 Modena (MO) (IT); DUPUY, Laurent, 92100 Boulogne Billancourt (FR)
(86) Numéro de dépôt international: PCT/FR2018/050478
(87) Numéro de publication internationale: WO 2018/178531

(56) Documents cités:
- EP-A1- 1 302 359
- EP-A1- 1 469 195
- DE-T5-112008 001 221
- FR-A1- 2 969 212
- FR-A1- 3 033 463

## Description

L'invention s'inscrit dans le domaine de la gestion des ressources matérielles d'un véhicule automobile à moteur électrique équipé d'un système de recharge électrique, qui peut être un véhicule purement électrique, ou un véhicule hybride, disposant d'un moteur électrique et d'un moteur thermique.

Un véhicule automobile à moteur électrique (ou un véhicule automobile à motorisation hybride du type auquel s'applique l'invention) dispose d'un élément de stockage d'énergie électrique de haute capacité, de type « basse tension 200 - 800 V », qui peut être rechargé en le reliant électriquement à une borne de rechargement, celle-ci pouvant être située au domicile du conducteur, ou dans un lieu public.

Le véhicule comprend un ou deux moteurs électriques, par exemple un moteur électrique à l'avant et un à l'arrière. Il comprend de plus différentes fonctions nécessitant de l'énergie électrique, comme la climatisation, le chauffage, ou des mécanismes nécessitant une énergie mécanique. Toutes ces fonctions sont mises en œuvre par des composants de puissance qui sont alimentés en électricité et éventuellement commandés par des réseaux de puissance associés.

Les réseaux de puissance associés doivent être mis sous tension, pour la mise en route du composant de puissance qui fournit la fonction concernée. Traditionnellement, les réseaux de puissance sont mis hors tension quand la fonction n'est plus demandée par l'utilisateur, ou parfois quand la fonction est éteinte par une routine automatique. Il est ainsi connu des dispositifs qui mettent sous tension les réseaux de puissance à la fin d'une utilisation, comme la fin de la phase de roulage, la fin de la phase de recharge, ou la fin du préconditionnement thermique du véhicule à l'arrêt.

Or, il est apparu que chaque mise sous tension et chaque mise hors tension des réseaux de puissance a un impact sur la durée de vie prévisionnelle du véhicule et la diminue. On peut donc souhaiter diminuer les mises hors tension quand il peut être anticipé qu'une remise en tension va avoir lieu à bref délai.

Le document EP-A1-1675757, tout comme le document de brevet FR-A1-3033463, EP-A1-1302359, FR-A1-2969212, ou encore EP-A1-1469195, décrit un procédé, dans un véhicule automobile, de gestion de la puissance d'une batterie, incluant une désactivation retardée d'un circuit de maintien d'une alimentation électrique auxiliaire. Mais les enseignements de ce document, pas plus que l'arrière-plan technique, ne permettent de diminuer les désactivations quand il peut être anticipé que cela est souhaitable.

Pour résoudre ce problème, il est proposé un procédé de gestion des composants électriques dans un véhicule automobile comprenant un moteur électrique et un système électrique de puissance associé audit moteur, une batterie de stockage d'électricité, un système de recharge électrique par connexion à une source d'énergie électrique extérieure et un système électrique de puissance associé au système de recharge, ainsi que un ou plusieurs systèmes électriques de puissance associés à d'autres fonctions du véhicule.

Selon l'invention, le procédé comprend une étape de réception d'une commande d'extinction d'une fonction à éteindre parmi le moteur électrique, le système de recharge ou une desdites autres fonctions du véhicule, une étape de détermination, sur la base de critères prédéterminés comprenant au moins une provenance de la commande d'extinction, d'une temporisation de la mise hors tension d'un ou de plusieurs systèmes électriques de puissance du véhicule liés électriquement à la fonction à éteindre en vue de préparer une éventuelle réactivation de la fonction à éteindre, une étape de réalisation de la temporisation, puis, en l'absence de commande de réactivation de la fonction à éteindre, une étape de mise hors tension dudit un ou plusieurs systèmes électriques de puissance liés électriquement à la fonction à éteindre.

Des caractéristiques optionnelles et avantageuses peuvent être les suivantes :
- les systèmes électriques de puissance à mettre hors tension liés électriquement à la fonction à éteindre comprennent les systèmes électriques de puissance associés au moteur électrique, au système de recharge et auxdites autres fonctions du véhicule, un bus unique les reliant électriquement ;
- les systèmes électriques de puissance à mettre hors tension liés à la fonction à éteindre comprennent uniquement le système électrique de puissance associé à la fonction à éteindre, qui est associé à un discontacteur propre ;
- que les autres fonctions du véhicule sont mises en œuvre par des composants de puissance transformant l'énergie électrique en énergie électrique avec une autre tension, en énergie mécanique, en énergie hydraulique ou en énergie thermique ;
- la commande d'extinction est obtenue par un appui sur un bouton du véhicule, par une application de dispositif électronique portable communiquant ou une télécommande, une information de batterie pleine, une information de défaillance du véhicule ou d'un composant du véhicule, une extinction par un superviseur électronique du véhicule ayant détecté l'absence du conducteur, ou une information de réserve de carburant et d'énergie électrique épuisée ;
- les critères prédéterminés incluent des informations fournies par les systèmes de géolocalisation du véhicule, ou la reconnaissance d'une borne de recharge connue ;

De plus, l'invention propose un véhicule automobile comprenant un moteur électrique et un système électrique de puissance associé audit moteur, une batterie de stockage d'électricité, un système de recharge électrique par connexion à une source d'énergie électrique extérieure et un système électrique de puissance associé au système de recharge, ainsi que un ou plusieurs systèmes électriques de puissance associés à d'autres fonctions du véhicule.

Selon l'invention, le véhicule comprend des moyens de réception d'une commande d'extinction d'une fonction à éteindre parmi le moteur électrique, le système de recharge ou une desdites autres fonctions du véhicule, des moyens de détermination, sur la base de critères prédéterminés comprenant au moins la provenance de la commande d'extinction, d'une éventuelle temporisation de la mise hors tension d'un ou de plusieurs systèmes électriques de puissance du véhicule liés électriquement à la fonction à éteindre en vue de préparer une éventuelle réactivation de la fonction à éteindre, des moyens de réalisation de la temporisation, puis, des moyens de, en l'absence de commande de réactivation du fonction à éteindre, procéder à une mise hors tension dudit un ou plusieurs systèmes électriques de puissance liés électriquement à la fonction à éteindre.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue d'un premier mode de réalisation de l'invention ;
- la figure 2 est une vue d'un deuxième mode de réalisation de l'invention ;
- la figure 3 est un schéma d'un procédé selon l'invention.

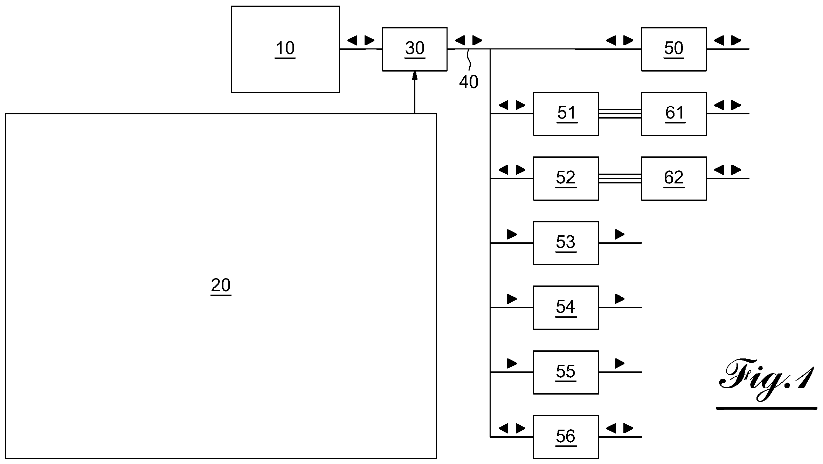

En figure 1, on a représenté une première architecture de véhicule automobile à laquelle l'invention s'applique.

Le véhicule comprend une batterie haute tension 10, une unité de commande électronique 20, un discontacteur 30, un bus à haute tension courant continu 40.

Le bus 40 est relié à la batterie 10 quand l'unité de commande 20 actionne le discontacteur de puissance 30 pour une mise sous tension. Le bus alimente alors les réseaux de puissance 50 à 56 qui sont adaptés et configurés pour la fourniture par des composants de puissance de diverses fonctions, parmi lesquelles la charge de la batterie, la traction ou la propulsion du véhicule, la fourniture d'une puissance mécanique pour un mécanisme divers, un chauffage, par exemple le chauffage de l'habitacle ou de certains composants du véhicule, y compris lors du préconditionnement du véhicule, la climatisation, ou d'autres.

Parmi ces composants, on a choisi de faire figurer sur la figure les moteurs électriques 61 et 62, qui sont alimentés par des onduleurs 51 et 52 qui leur fournissent du courant alternatif. À titre illustratif, on précise que le réseau de puissance 53 peut correspondre à une pompe à haute tension, le réseau 54 à un chauffage par résistance chauffante, le réseau 55 à un compresseur pour la climatisation et le réseau 56 un circuit comprenant des résistances, des inductances et des capacités et assurant in fine une fonctionnalité dans le véhicule utilisant une énergie sous une forme ou une autre (thermique, mécanique, hydraulique, électrique, ...).

On précise que les composants sont dimensionnés en fonction du nombre de cycles mise en tension / mise hors tension qui sont prévus au cours de la vue du véhicule. Ce nombre est qualifié de « cyclage ». Il s'agit du nombre de mise sous tension du bus alimentant les réseaux de puissance et les composants.

Sur la figure 1, à titre purement explicatif, des flèches indiquent le sens de circulation de l'énergie électrique, qui pour certaines fonctions, notamment les moteurs électriques, peut se faire dans les deux sens, et pour d'autres ne peut se faire que dans un seul sens.

L'unité de commande 20 reçoit des informations comme la vitesse horizontale du véhicule ou la position géographique de celui-ci déterminée par un système de type GPS (Global Positionning System, ou système de positionnement global).

Elle reçoit également des commandes du conducteur comme des commandes de déclenchement ou d'arrêt de la motorisation, ou des commandes de début ou d'arrêt de la charge.

Sur cette base, l'unité de commande 20 pilote le passage du discontacteur 30 d'un état à l'autre : de l'état ouvert à l'état fermé. À l'état ouvert, les réseaux de puissance ne sont pas mis sous tension, alors qu'à l'état fermé, ils sont mis sous tension.

Une commande d'activation (allumage) de la motorisation peut être transmise à l'unité de commande 30 via le bouton START situé sur le tableau de bord du véhicule, sur lequel le conducteur appuie, ou via une télécommande (autrement appelé « plip », outil de verrouillage à distance des portes de voiture ou encore « clé »).

Une commande de désactivation (extinction) de la motorisation peut aussi être transmise à l'unité de commande 30 via le bouton START ou via une télécommande, ou encore de façon automatique, par détection de l'absence du conducteur par un superviseur du véhicule (non représenté, mais capable d'observer la présence du conducteur et d'envoyer, du fait de son absence plus ou moins prolongée, une commande de désactivation de la motorisation, à des fins d'économie d'énergie), ou en réaction au branchement du cordon de recharge électrique.

Une commande d'activation de la charge peut être transmise à l'unité de commande 30 en réaction au branchement du cordon de charge.

Une commande d'activation ou de désactivation de la charge peut être transmise à l'unité de commande 30 en réaction à une action sur une application dédiée de téléphone intelligent (smartphone) ou autre appareil portable communiquant ou sur un bouton de recharge porté par le véhicule (interface homme-machine ou IHM de proximité) ou via la télécommande. L'application est fournie avec le véhicule ou fournie par le constructeur, pour permettre certains actes de gestion du véhicule, notamment sa charge.

Une commande de désactivation de la charge peut être transmise à l'unité de commande 30 en réaction à une information indiquant que la batterie est pleine générée par la batterie 10.

Toutes les demandes d'activation des réseaux de puissance sont traitées sans délai pour activer (allumer) au plus tôt toutes les fonctionnalités liées, et ainsi ne pas faire attendre le conducteur, ou l'utilisateur.

S'agissant des demandes de désactivation, la prédiction d'un scénario, notamment la prédiction d'un comportement général de l'utilisateur permet de diminuer le nombre de cycles mise en tension / mise hors tension appliqué aux réseaux et composants de puissance.

Lorsque le véhicule est garé et en phase de recharge de sa batterie 10, les réseaux de puissance sont sous tension. La fin de cette phase de recharge, provoquée par divers événements, peut déclencher une mise hors tension immédiate ou au contraire différée des réseaux de puissance 51 à 56 en fonction du résultat d'une prédiction comme suit :

Si la fin de la phase de recharge provient d'une action explicite de l'utilisateur, par exemple une action sur l'application de gestion de la charge, une action par la télécommande, ou une action sur l'IHM, alors les réseaux de puissance sont maintenus pour une durée prédéfinie qui peut dans certaines variantes dépendre de la nature de l'action du conducteur ou utilisateur (exemple : l'action du conducteur ou utilisateur par l'application de téléphone entraine une temporisation de 5 min quand une action par al télécommande entraine une temporisation 2 min).

Si l'interruption de la charge n'est pas liée à une action du conducteur ou de l'utilisateur, par exemple parce qu'elle est liée au fait que la batterie 10 est pleine, qu'un système a détecté une défaillance du véhicule ou d'un composant, ou encore une surchauffe excessive, alors les réseaux de puissance 51 à 56 sont immédiatement désactivés (mis hors tension).

De même à la fin d'une phase de roulage, lors de la désactivation de la motorisation, l'invention propose une prédiction de la mise en charge imminente du véhicule, comme suit.

Les réseaux de puissance sont immédiatement désactivés si la désactivation du véhicule n'est pas issue d'une demande directe du conducteur ou de l'utilisateur par appui sur le bouton Start ou sur la télécommande mais si elle est au contraire une désactivation automatique déclenchée par le superviseur, qui a remarqué que le conducteur est absent depuis une durée significative, ou que le véhicule est à l'arrêt et ses réserves de carburant et d'énergie électrique sont épuisées.

En cas de désactivation (extinction) en réaction à une action du conducteur ou de l'utilisateur, un arbitrage relatif au maintien sous tension des réseaux de puissance peut être effectué en fonction d'informations fournies par les systèmes de géolocalisation du véhicule.

De façon non limitative, les réseaux de puissance 51 à 56 sont maintenus sous tension lors d'une désactivation (extinction de fonction) au domicile du conducteur (l'adresse de sa résidence étant enregistrée dans une mémoire du véhicule), lors d'une désactivation dans un lieu de recharge de coordonnées géographiques pré-enregistrées (le système peut par exemple enregistrer les coordonnées géographiques des derniers lieux de recharge, par exemple les 5 derniers lieux, à l'aide du système GPS), ou lors d'une désactivation près d'une borne de recharge publique reconnue par le système à l'aide d'une base de données.

Enfin, en cas de désactivation de la motorisation par le conducteur au cours d'une phase de roulage, la prédiction est qu'une réactivation va intervenir rapidement et les réseaux de puissance sont maintenus actifs.

Dans le mode de réalisation qui vient d'être présenté, le bus 40 est unique et met sous tension, sous l'action du discontacteur 30, tous les réseaux de puissance 50 à 56.

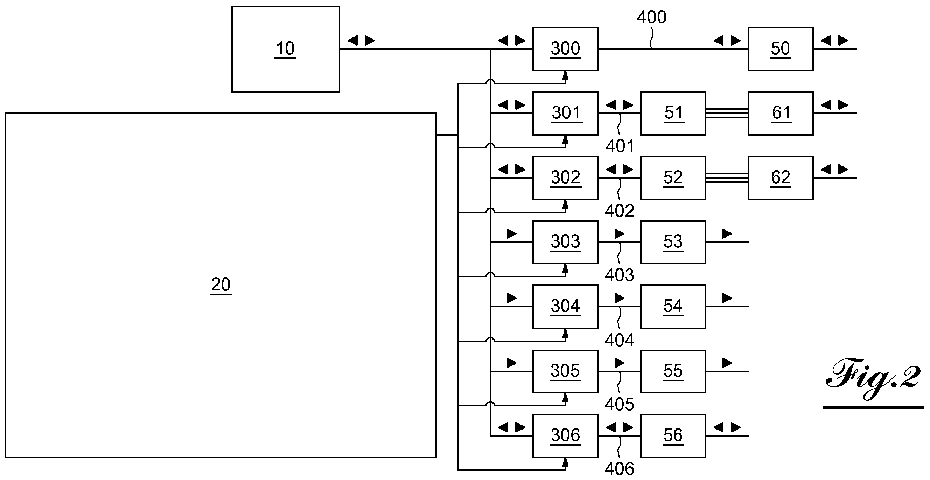

Une variante représentée en figure 2 consiste à répartir les différents composants de puissance 61, 62 etc... et leurs réseaux de puissance 50 à 56 sur des bus distincts 400 à 406, équipés chacun d'un discontacteur propre 300 à 306.

Chaque discontacteur 300 à 306 reçoit une commande individualisée de l'unité de commande 20, pour passer de la position ouvert à la position fermé. Ainsi, chacun des bus 400 à 406 n'est mis sous tension que dans des situations spécifiques. On a ainsi un bus 400 dédié à la recharge, un bus 404 dédié au préconditionnement thermique et des bus 401 et 402 dédiés à la propulsion ou à la traction.

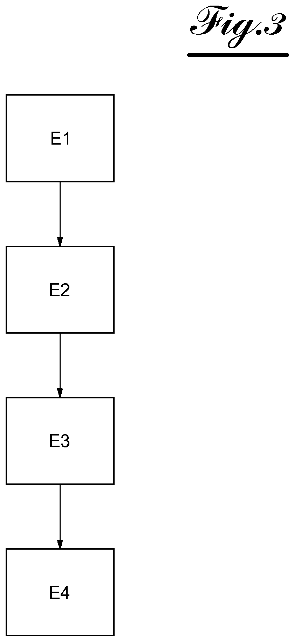

En figure 3, on a représenté le procédé mis en œuvre dans le système selon l'invention, dans l'une ou l'autre de ses formes de réalisation.

Le procédé comprend
- une étape E1 de réception d'une commande de désactivation (extinction) d'une fonction à éteindre parmi le moteur électrique, le système de recharge ou une desdites autres fonctions du véhicule ;
- une étape E2 de détermination, sur la base des critères prédéterminés évoqués ci-dessus, d'une éventuelle temporisation de la mise hors tension d'un ou de plusieurs systèmes électriques de puissance du véhicule liés électriquement (l'alimentant et la commandant) à la fonction à éteindre en vue de préparer une éventuelle réactivation (rallumage) de la fonction à éteindre ;
- une étape E3 de réalisation de la temporisation (attente d'une durée prédéterminée), puis, en l'absence de commande de réactivation de la fonction à éteindre ;
- et une étape E4 de mise hors tension dudit un ou plusieurs systèmes électriques de puissance liés électriquement à la fonction à éteindre.

Ce procédé permet d'optimiser le dimensionnement des composants de puissance, en diminuant leur coût et en garantissant leur durabilité. La durée de vie du véhicule est augmentée.

## Revendications

1. Procédé de gestion des composants électriques dans un véhicule automobile comprenant un moteur électrique (61, 62) et un système électrique de puissance associé audit moteur (51, 52), une batterie de stockage d'électricité (10), un système de recharge électrique par connexion à une source d'énergie électrique extérieure et un système électrique de puissance associé au système de recharge (50), ainsi que un ou plusieurs systèmes électriques de puissance associés à d'autres fonctions du véhicule (53-56), **caractérisé en ce que** le procédé comprend une étape de réception (E1) d'une commande d'extinction d'une fonction à éteindre parmi le moteur électrique (61, 62), le système de recharge ou une desdites autres fonctions du véhicule, une étape de détermination (E2), sur la base de critères prédéterminés comprenant au moins une provenance de la commande d'extinction, d'une temporisation de la mise hors tension d'un ou de plusieurs systèmes électriques de puissance du véhicule (50-56) liés électriquement à la fonction à éteindre en vue de préparer une éventuelle réactivation de la fonction à éteindre, une étape de réalisation (E3) de la temporisation, puis, en l'absence de commande de réactivation de la fonction à éteindre, une étape de mise hors tension (E4) dudit un ou plusieurs systèmes électriques de puissance (50-56) liés électriquement à la fonction à éteindre.

2. Procédé de gestion selon la revendication 1, **caractérisé en ce que** le un ou plusieurs systèmes électriques de puissance liés électriquement à la fonction à éteindre comprend les systèmes électriques de puissance associés au moteur électrique (51, 52), au système de recharge (50) et auxdites autres fonctions du véhicule (53-56), un bus unique (40) les reliant électriquement.

3. Procédé de gestion selon la revendication 1, **caractérisé en ce que** le un ou plusieurs systèmes électriques de puissance liés à la fonction à éteindre comprend uniquement le système électrique de puissance associé à la fonction à éteindre (50-56), qui est associé à un discontacteur propre (300-306).

4. Procédé de gestion selon l'une des revendications 1 à 3, **caractérisé en ce que** les autres fonctions du véhicule (53-56) sont mises en œuvre par des composants de puissance transformant l'énergie électrique en énergie électrique avec une autre tension, en énergie mécanique, en énergie hydraulique ou en énergie thermique.

5. Procédé de gestion selon l'une des revendications 1 à 4, **caractérisé en ce que** la commande d'extinction est obtenue par un appui sur un bouton du véhicule, par une application de dispositif électronique portable communiquant ou une télécommande, une information de batterie pleine, une information de défaillance du véhicule ou d'un composant du véhicule, une extinction par un superviseur électronique du véhicule ayant détecté l'absence du conducteur, ou une information de réserve de carburant et d'énergie électrique épuisée.

6. Procédé de gestion selon l'une des revendications 1 à 5, **caractérisé en ce que** les critères prédéterminés incluent des informations fournies par les systèmes de géolocalisation du véhicule, ou la reconnaissance d'une borne de recharge connue.

7. Véhicule automobile comprenant un moteur électrique (61, 62) et un système électrique de puissance associé audit moteur (51, 52), une batterie de stockage d'électricité (10), un système de recharge électrique par connexion à une source d'énergie électrique extérieure et un système électrique de puissance associé au système de recharge (50), ainsi que un ou plusieurs systèmes électriques de puissance associés à d'autres fonctions du véhicule (53-56), **caractérisé en ce que** le véhicule comprend des moyens de réception d'une commande d'extinction d'une fonction à éteindre parmi le moteur électrique, le système de recharge ou une desdites autres fonctions du véhicule, des moyens de détermination, sur la base de critères prédéterminés comprenant au moins une provenance de la commande d'extinction, d'une éventuelle temporisation de la mise hors tension d'un ou de plusieurs systèmes électriques de puissance (50-56) du véhicule liés électriquement à la fonction à éteindre en vue de préparer une éventuelle extinction de la fonction à éteindre, des moyens de réalisation de la temporisation, puis, des moyens de, en l'absence de commande de réactivation de la fonction à éteindre, procéder à une mise hors tension dudit un ou plusieurs systèmes électriques de puissance (50-56) liés électriquement à la fonction à éteindre.

## Patentansprüche

1. Verfahren zum Verwalten Der Komponenten elektrischen s in einem Kraftfahrzeuge ein , umfassend Elektromotor (61, 62) und ein elektrisches Energiesystem mit dem Motor verbunden ist (51, 52), eine elektrische Speicherbatterie (10), ein Ladesystem die elektrische Verbindung mit einer externen Quelle elektrischer Energie und einem elektrischen Leistungssystem mit dem Ladesystem verbunden ist (50), und einem oder mehr Systeme s elektrischen Leistung, die mit sind Funktionen des Fahrzeugs (53-56) **Dadurch gekennzeichnet, dass** das Verfahren umfasst einen Empfangsschritt (E1) eine Steuerlösch eine e - Funktion auszuschalten , vom Elektromotor (61, 62), das Ladesystem oder die anderen s Funktion s das Fahrzeug , ein Schritt, der (E2) auf der Basis eines vorbestimmten Kriteriums, das mindestens eines aus dem Löschbefehl umfasst, einen Zeitpunkt des Abschaltens eines oder mehrerer elektrischer Systeme der Leistung bestimmt Fahrzeug (50-56) verbunden elektrisch mit der Funktion auszuschalten in Vorbereitung auf eine mögliche Reaktivierung von der hat Funktion auszuschalten, ein Schritt der Ausführungsform (E3) des Timers, dann, in der Abwesenheit von Co B edienelemen Reaktivierung der Funktion abgeschaltet werden , einen Schritt der dE- Energetisierung (E4) des einen oder der mehreren elektrischen Stromversorgungssystemen (50-56) elektrisch verbunden, um die Funktion abgeschaltet werden.

2. Verwaltungsverfahren nach Anspruch 1, **dadurch gekennzeichnet, dass** das eine oder die mehreren mit der auszuschaltenden Funktion elektrisch verbundenen Stromversorgungssysteme die dem Elektromotor (51, 52) mit dem Ladesystem (50) zugeordneten Stromversorgungssysteme umfassen. und mit den anderen Fahrzeugfunktionen (53-56) ein einzelner Bus (40), der sie elektrisch verbindet.

3. Verwaltungsverfahren nach Anspruch 1, **dadurch gekennzeichnet, dass** das eine oder die mehreren mit der auszuschaltenden Funktion verbundenen Stromversorgungssysteme nur das mit der auszuschaltenden Funktion verbundene Stromversorgungssystem (50-56) umfassen, das mit a verbunden ist eigener Leistungsschalter (300-306).

4. Verwaltungsverfahren nach einem der Ansprüche 1 bis 3, das **dadurch gekennzeichnet ist, dass** die anderen Funktionen des Fahrzeugs (53-56) durch Leistungskomponenten implementiert werden, die elektrische Energie mit einer anderen Spannung in elektrische Energie umwandeln, in mechanische Energie, hydraulische Energie oder Wärmeenergie.

5. Verwaltungsverfahren nach einem der Ansprüche 1 bis 4, **dadurch gekennzeichnet, dass** der Schalt- off - Befehl durch Drücken einer Taste auf dem Fahrzeug erhalten wird, die von einer Anwendung einer kommunizierenden tragbaren elektronischen Gerät oder einer Fernbedienung , die volle Batterieinformationen Informationen über den Ausfall des Fahrzeugs oder einer Komponente des Fahrzeugs , ein Aussterben des Fahrzeugs durch einen elektronischen Vorgesetzten, der die Abwesenheit des Fahrers festgestellt hat, oder Informationen über die Reserve an Kraftstoff und verbrauchter elektrischer Energie .

6. Verwaltungsverfahren nach einem der Ansprüche 1 bis 5, das **dadurch gekennzeichnet ist, dass** die vorbestimmten Kriterien Informationen umfassen, die von den Geolokalisierungssystemen des Fahrzeugs geliefert werden, oder die Erkennung einer bekannten Ladestation.

7. Kraftfahrzeug, umfassend einen Elektromotor (61, 62) und ein dem Motor (51, 52) zugeordnetes elektrisches Energiesystem, eine Elektrizitätsspeicherbatterie (10), ein elektrisches Ladesystem durch Anschluss an eine Energiequelle externe Stromversorgung und ein elektrisches Leistungssystem mit dem Ladesystem verbunden ist (50) sowie ein oder mehr Systeme s elektrische Leistung mit anderen Fahrzeugfunktionen zugeordnet ist (53-56), **dadurch gekennzeichnet, dass** das Fahrzeug Mittel umfasst , Empfangen eines Befehls zum Löschen einer vom Elektromotor zu löschenden Funktion , des Ladesystems oder einer der anderen Funktionen des Fahrzeugs, Mittel zum Bestimmen auf der Basis von vorbestimmten Kriterien, die mindestens eine Quelle der umfassen Extinktion Steuerung einer möglichen Verzögerung der Abschaltung eines oder mehrere Leistungs elektrischer Systeme (50-56) des Fahrzeugs elektrisch mit der verbundenen Funktion auszuschalten in um prepar er eine mögliche Löschung von der Funktion ausgeschaltet werden , ein Mittel für die Zeitverzögerung durchgeführt wird , dann, mittels in Abwesenheit eines Befehls die reaktivieren Funktion werden einge ausgeschaltet, drehen off der einen oder mehreren Systemen Strom (50-56) elektrisch verbunden mit der auszuschaltenden Funktion .

## Claims

1. Method of managing electrical components in a motor vehicle comprising an electric motor (61, 62) and an electric power system associated with said motor (51, 52), an electrical storage battery (10), a recharging system electrical connection to an external source of electric power and an electric power system associated with the charging system (50), and one or more system s electrical power associated with d 'AUTR are functions of the vehicle (53-56) **Characterized in that** the method comprises a receiving step (E1) of a control extinguishing an e function to turn off from the electric motor (61, 62), the charging system or said other s function s the vehicle , a step determining (E2), on the basis of an predetermined criteria comprising at least one from the extinction command , a timing of the switching off of one or more electrical systems of the power vehicle (50-56) linked electrically to the function to turn off in preparation for a possible reactivation of the has function to turn off , a step of embodiment (E3) of the timer, then, in the absence of co Con trols reactivation of the function to be switched off , a step of de- energizing (E4) said one or more electrical power systems (50-56) electrically linked to the function to be switched off.

2. Management method according to claim 1, **characterized in that** the one or more electrical power systems electrically linked to the function to be switched off comprises the electrical power systems associated with the electric motor (51, 52), with the recharging system (50) and to said other vehicle functions (53-56), a single bus (40) electrically connecting them.

3. Management method according to claim 1, **characterized in that** the one or more electrical power systems linked to the function to be switched off comprises only the electrical power system associated with the function to be switched off (50-56), which is associated with a own circuit breaker (300-306).

4. Management method according to one of claims 1 to 3, **characterized in that** the other functions of the vehicle (53-56) are implemented by power components transforming electrical energy into electrical energy with another voltage, in mechanical energy, hydraulic energy or thermal energy.

5. Management method according to one of claims 1 to 4, **characterized in that** the switch- off command is obtained by pressing a button on the vehicle, by an application of a communicating portable electronic device or a remote control, full battery information , information on the failure of the vehicle or a component of the vehicle , an extinction by an electronic supervisor of the vehicle having detected the absence of the driver, or information on the reserve of fuel and exhausted electrical energy.

6. Management method according to one of claims 1 to 5, **characterized in that** the predetermined criteria include information supplied by the vehicle's geolocation systems, or the recognition of a known charging station.

7. Motor vehicle comprising an electric motor (61, 62) and an electric power system associated with said motor (51, 52), an electricity storage battery (10), an electric recharging system by connection to an energy source external power and an electric power system associated with the charging system (50) as well as one or more system s electrical power associated with other vehicle functions (53-56), **characterized in that** the vehicle comprises means receiving a command to extinguish a function to be extinguished from the electric motor, the recharging system or one of said other functions of the vehicle, means for determining, on the basis of predetermined criteria comprising at least one source of the controlling extinction of a possible delay of the switching off of one or several power electrical systems (50-56) of the vehicle electrically connected to the function to turn off in order to prepar er a possible extinction of the function to be turned off, means for carrying out the time delay, then, means of, in the absence of a command to reactivate the function to be turned off , to turn off said one or more systems electrical power (50-56) electrically linked to the function to be switched off.
